# EUROPÄISCHE PATENTSCHRIFT

(11) **EP 2 577 072 B1**
(45) Veröffentlichungstag und Bekanntmachung des Hinweises auf die Patenterteilung: **30.03.2016**
(21) Anmeldenummer: 11720422.2
(22) Anmeldetag: 06.05.2011
(51) Int. Cl.: F16B 5/06, F16B 21/07

(54) **VERBINDUNGSANORDNUNG**
FASTENING ASSEMBLY
ENSEMBLE DE FIXATION

(30) Priorität: 26.05.2010 DE 202010005500 U
(43) Veröffentlichungstag der Anmeldung: 10.04.2013
(73) Patentinhaber: SFS Intec Holding AG, 9435 Heerbrugg (CH)
(72) Erfinder: SCHENDEL, Olav, 70567 Stuttgart (DE)
(86) Internationale Anmeldenummer: PCT/EP2011/057270
(87) Internationale Veröffentlichungsnummer: WO 2011/147667

(56) Entgegenhaltungen:
- EP-A1- 1 104 853
- DE-A1- 4 109 902
- US-A- 5 261 772
- US-A- 5 533 237

## Beschreibung

Die vorliegende Erfindung betrifft eine Verbindungsanordnung zum lösbaren Verbinden zweier mit aufeinander ausgerichteten Öffnungen versehener Bauteile, bei der in der Öffnung des einen zu verbindenden Bauteils ein in einer Hülse geführter Bolzen vorgesehen ist, wobei Hülse und Bolzen durch die Öffnung des anderen Bauteils hindurchragen und der Bolzen am hindurchragenden Teil mindestens eine Aussparung aufweist, in welche beim Eindrücken des Bolzens in eine mit dem ersten Bauteil in Verbindung stehende Blattfeder mindestens ein Federende eingreift, wobei der Bolzen mit einem außerhalb der Hülse angeordneten Entriegelungsteil versehen ist und wobei das Entriegelungsteil bei Eindrücken des Bolzens die Blattfeder zum Lösen der Verbindung spreizt.

Eine Vorrichtung der eingangs genannten Art ist für diverse Spezialanwendungen bekannt.

Aus dem Dokument DE 100 57 947 A1, welches sich auf eine innere Priorität nach dem Dokument DE 299 20 498 U1 stützt, ist eine Verbindungsanordnung zum lösbaren Verbinden zweier mit aufeinander ausgerichteten Öffnungen versehener Bauteile bekannt, bei der in der Bohrung des einen zu verbindenden Teiles ein in einer Hülse geführter Bolzen vorgesehen ist, wobei Hülse und Bolzen durch die Öffnung des anderen Bauteils hindurchragen und der Bolzen am hindurchragenden Teil mindestens eine äußere Aussparung aufweist, in welche beim Eindrücken des Bolzens in eine mit dem anderen Bauteil in Verbindung stehende Blattfederanordnung das Ende mindestens eines freien Blattfederarmes eingreift, wobei der Bolzen mit einem außerhalb der Hülse angeordneten Entriegelungsteil mittels mindestens eines in einem Hülsenwandungsdurchbruch geführten Verbindungssteges verbunden ist und wobei das Entriegelungsteil bei weiterem Eindrücken des Bolzens die Blattfederanordnung zum Lösen der Verbindung spreizt, wobei die erste Aussparung ringförmig ausgebildet und konzentrisch zur Hülsenachse angeordnet ist und das Entriegelungsteil ein konzentrisch zur Bolzenachse angeordneter Ring ist, wobei der den Bolzen mit dem Ring verbindende Verbindungssteg in einem als Führungsbahn ausgebildeten durchbrochenen Teil der Hülsenwandung verschiebbar ist. Diese Verbindungsanordnung ist kompliziert aufgebaut und nicht einfach zu lösen. Der versenkt in der Hülse angeordnete Bolzen muss zum Lösen der Verbindung mit einem stiftartigen Werkzeug betätigt werden.

Aus dem Dokument DE 35 11 070 C2 ist eine Vorrichtung zum lösbaren Verbinden zweier mit fluchtenden Öffnungen versehener Bauteile bekannt, die zum Lösen der Verbindung einen Entriegelungsbolzen benötigt. Dieser ist in einem Schließbolzen der Vorrichtung geführt. Der Entriegelungsbolzen kann immerhin durch Fingerdruck niedergedrückt werden, zur Not aber auch mittels eines Werkzeuges.

Eine Verbindungsanordnung der eingangs genannten Art ist aus dem Dokument DE 41 09 902 A1 bekannt. Zum Lösen der Verbindung muss mit einem Finger oder einem speziellen Werkzeug ein Ende des Bolzens weiter hineingedrückt werden, damit das Entriegelungsteil gegen die Enden der Blattfeder gedrückt und die Blattfeder so weit gespreizt wird, bis die Federenden die Aussparung des Bolzens verlassen, so dass sich der Bolzen in seine unterste Stellung bewegen kann, in der die Verbindungsanordnung entriegelt ist.

Die Airbusnormen ABS0696 und ABS0798 vom September 2009 bzw. 23.04.2010 beschreiben ebenfalls Verbindungsanordnungen, welche die oben erwähnten Merkmale in verschiedenen Kombinationen zeigen. Allen Ausführungsformen gemeinsam ist, dass die Blattfedern im Bolzen einhaken und nur durch den Einsatz des Entriegelungsteils wieder gelöst werden können. Die Blattfedern sind daher in einer Art Widerhaken ausgestaltet. Insbesondere in der Luftfahrt gibt es nun Verbindungsanordnungen, die im Falle eines plötzlich auftretenden Druckabfalls in der Kabine eine Notöffnung benötigen. Eine solche Notöffnung muss automatisch ohne menschliches Eingreifen erfolgen. Für diese Anwendungen sind die im Stand der Technik beschriebenen Verbindungsanordnungen daher ungeeignet.

Aufgabe der Erfindung ist es, eine Verbindungsanordnung der eingangs genannten Art mit einem einfacheren Aufbau zu versehen und außerdem so zu gestalten, dass die Verbindung selbsttätig gelöst werden kann.

Dies gelingt erfindungsgemäß dadurch, dass ein Notöffnungsmechanismus dadurch gebildet wird, dass an dem Bolzen in einer Aussparung oder Nut oder an einem Schließkopf eine Anschlagfläche angebracht ist, die mit der Achse des Bolzens einen Winkel von kleiner als 90 Grad, insbesondere von kleiner als 60 Grad und mehr insbesondere von kleiner als 45 Grad bildet, und dass die Blattfeder am Federende so geformt ist, dass die Anschlagfläche mit dem Federende der Blattfeder einen formschlüssigen Anschlag bilden kann, wobei der Winkel und die Federkraft der Blattfeder so gewählt sind, dass bei einer axial auf den Bolzen in Öffnungsrichtung wirkenden Auslösekraft, die die Klemmkraft der Blattfeder übersteigt, die Blattfeder von der Anschlagfläche lösbar ist.

Die Verbindungsanordnung nach der Erfindung kann ohne einen Entriegelungsbolzen, wie er im oben erläuterten Stand der Technik erforderlich ist, geöffnet werden. Es braucht lediglich ein Druck entgegengesetzt zur Einführrichtung des Bolzens der Verbindungsanordnung nach der Erfindung ausgeübt zu werden, um die Verbindung zu lösen. Für diesen Zweck ist die Verbindungsanordnung nach der Erfindung mit einem Notöffnungsmechanismus versehen, der bei Bedarf die Verbindung automatisch ohne menschliches Eingreifen löst.

Vorteilhafte Ausgestaltungen der Erfindung bilden die Gegenstände der Unteransprüche.

In einer Ausgestaltung der Erfindung ist die Anschlagfläche eine V-förmige Aussparung am Bolzen oder am Schließkopf. Dadurch wird erreicht, dass mindestens eine, vorzugsweise zwei gegenüber angeordnete Aussparungen zum Eingriff einer klammerförmigen Blattfeder eingreifbar gestaltet wird, resp. werden. In einfacher Art und Weise lassen sich diese Aussparungen z.B. mittels eines Profilfräsers herstellen. Die Anschlagfläche bildet dabei eine Ebene an der das Federende aufliegt. Zwischen den zwei V-förmig angeordneten Ebenen ist ein Radius angebracht, der eine beliebige Größe aufweisen kann.

In einer weiteren Ausgestaltung der Erfindung ist die Anschlagfläche konisch. Diese konische Anschlagfläche kann als Nut am zylindrischen Teil des Bolzens oder als Schließkopf an dem Bolzen angebracht sein. Bolzen und Schließkopf können dabei einteilig oder mehrteilig ausgeführt sein.

I In einer weiteren Ausgestaltung der Erfindung ist die Blattfeder zwischen dem Entriegelungsteil und dem Schließkopf mit dem Bolzen in Kontakt bringbar. Die Blattfeder muss eine Federspannung aufweisen, damit diese die Verbindung im Belastungsfalle bis zum definierten Grenzwert hält. Um über viele Verbindungspunkte eine berechenbare konstante Auslösekraft zu erhalten, ist es vorteilhaft, wenn die Blattfeder in unbelastetem Zustand mindestens bis an den zylindrischen Teil des Bolzens im geschlossenen Zustand reicht.

In einer weiteren Ausgestaltung der Erfindung besteht die Blattfeder aus einem oder mehreren Blattfederarmen. Mit der Anzahl der Federarme kann die gewünschte Auslösekraft mit bestimmt werden. Je größer die Auslösekraft gewünscht wird, umso mehr Federarme können eingesetzt werden. Typischerweise werden 2, 4 oder 6 Federarme als Blattfederanordnung ausgestaltet. Dabei kann diese Blattfederanordnung aus einem oder mehreren Elementen hergestellt sein.

In einer weiteren Ausgestaltung der Erfindung ist der Schließkopf teilweise in das Entriegelungsteil einfahrbar ausgestaltet. Dadurch wird die Baulänge des Bolzens geringer. Am Entriegelungsteil können weitere Elemente angebracht werden, die die Blattfeder zur Entriegelung zwingen. Trotzdem kann das Entriegelungsteil vollständig an den Schließkopf gedrückt werden, so dass die Blattfeder über den Schließkopf hinaus gestoßen wird. Die weiteren Elemente können dabei eine konische Form haben. Diese weiteren Elemente können in Aussparungen des Schließkopfes einfahrbar ausgestaltet sein.

Weitere Vorteile und Ausgestaltungen der Erfindung ergeben sich aus den beiliegenden Zeichnungen und der folgenden Beschreibung.

Alle erläuterten Merkmale sind nicht nur in der jeweils angegebenen Kombination, sondern auch in anderen Kombinationen oder in Alleinstellung verwendbar, ohne den Rahmen der erfindungsgemäßen Ausführungen zu verlassen.

Ausführungsbeispiele der Erfindung werden im Folgenden unter Bezugnahme auf die Zeichnungen näher erläutert. Es zeigen:
- Fig. 1: eine Verbindungsanordnung in geschlossenem Zustand;
- Fig. 2: einen Ausschnitt der Verbindungsanordnung mit Blattfedern und Schließkopf;
- Fig. 3: eine Verbindungsanordnung in geöffnetem Zustand;
- Fig. 4: eine Verbindungsanordnung in geschlossenem Zustand;
- Fig. 5: eine Verbindungsanordnung in entriegeltem Zustand;
- Fig. 6: eine Verbindungsanordnung im Zustand einer Notöffnung;
- Fig. 7: eine perspektivisch dargestellte Verbindungsanordnung; und
- Fig. 8: eine Verbindungsanordnung mit anderer Ausgestaltung.

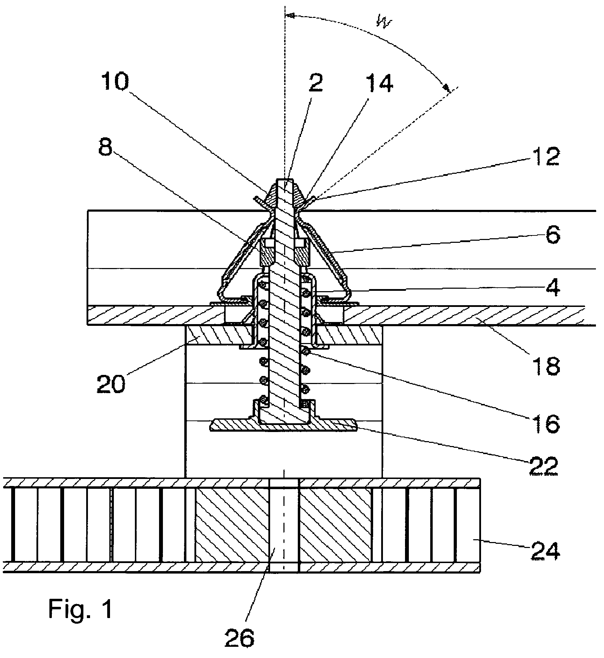

Eine in **Fig. 1** dargestellte Verbindungsanordnung zeigt den geschlossenen, verriegelten Zustand der Verbindung. Ein Notöffnungsmechanismus wird dadurch gebildet, dass am Bolzen 2 an einem Schließkopf 10 eine Anschlagsfläche 14 angebracht ist, die mit der Achse des Bolzens 2 einen kleineren Winkel W als 90 Grad bildet, der typischerweise kleiner als 60 Grad ist und sogar kleiner als 45 Grad sein kann, und dass die Blattfeder 6 am Federende 12 so geformt ist, dass die Anschlagfläche 14 mit dem Federende 12 der Blattfeder 6 einen formschlüssigen Anschlag bildet. Der gewählte Winkel W und die Federkraft der Blattfeder 6 werden dabei so ausgelegt, dass bei einer axial auf den Bolzen 2 in Öffnungsrichtung wirkenden Auslösekraft diese die Klemmkraft der Blattfeder 6 übersteigt und die Blattfeder so von der Anschlagfläche 14 lösbar ist. Zwischen der Auslösekraft und der Klemmkraft liegt ein Faktor, der insbesondere durch den Winkel W beeinflusst werden kann. Damit ist es möglich mit der gleichen Blattfeder 6 verschiedene Auslösekräfte einer erfindungsgemäßen Verbindung zu erzielen. Auch umgekehrt ist es möglich, bei gleichem Winkel W durch eine andere Blattfeder 6 die Auslösekraft mit zu bestimmen. Der Notöffnungsmechanismus kann damit mit einer definierten Lastgrenze ausgeführt werden.

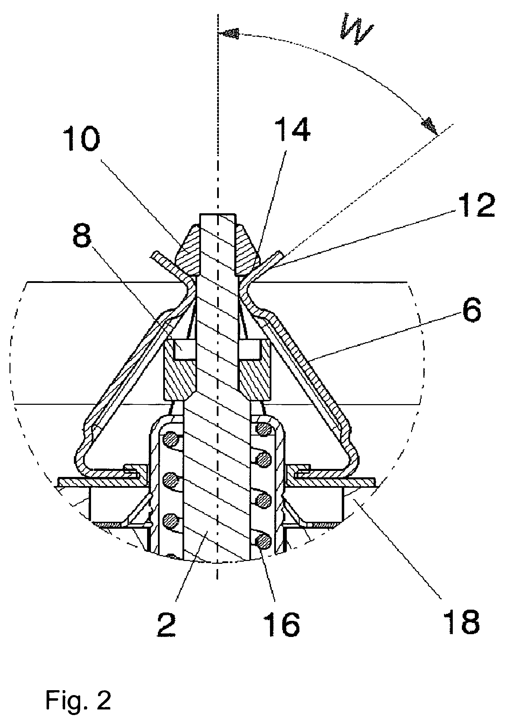

**Fig. 2** zeigt einen Ausschnitt aus Fig. 1. Die Anschlagfläche 14 ist konisch ausgebildet und weist eine kegelartige Oberfläche auf. An dieser Fläche liegt das Federende 12 im geschlossenen Zustand der Verbindung auf. Der Schließkopf 10 kann teilweise in das Entriegelungsteil 8 einfahrbar ausgestaltet sein. Dies ist besonders bei einem kleineren Winkel W nötig, damit die Feder beim Entriegeln über den Schließkopf 10 geschoben wird. Die Blattfeder 6 ist zwischen dem Entriegelungsteil 8 und dem Schließkopf 10 mit dem Bolzen 2 in Kontakt und federt damit weitmöglichst in ihren Ausgangszustand zurück.

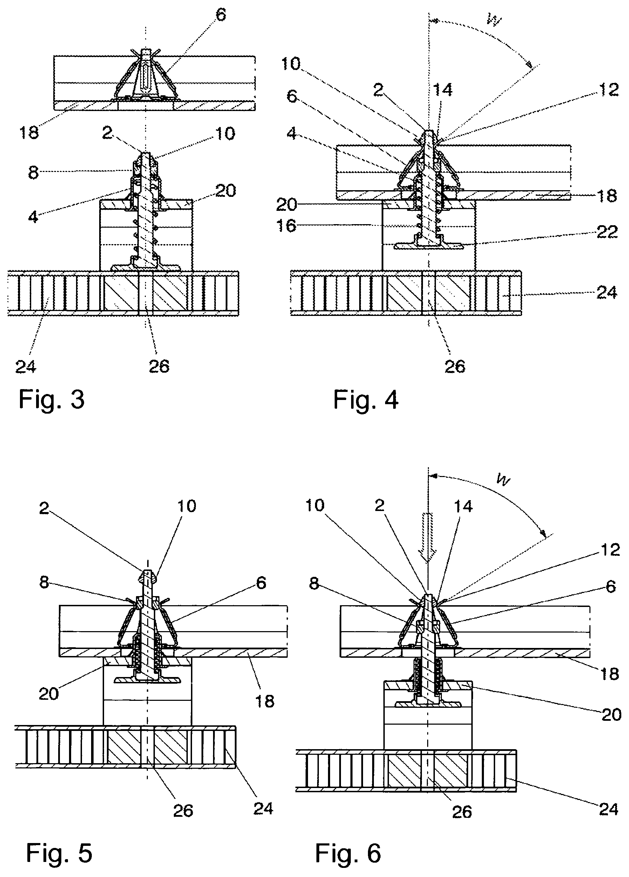

Eine Ausführungsvariante gemäß **Fig. 3** zeigt den geöffneten Zustand der Verbindung. Die beiden Bauteile 18, 20 werden nun so aneinander gebracht, dass der Bolzen 2 in die Bohrung des Bauteiles 18 mit der Blattfeder 6, resp. den Blattfedern 6 eingebracht werden kann. Durch die Panelöffnung 26 hindurch kann der Bolzen 2 nun in die Schließstellung gebracht werden, in der die Blattfeder 6 auf die Anschlagfläche 14 auftrifft und mit dem Federende 12 eine formschlüssige Verbindung eingeht. Erst in dieser Position ist die Verbindung verriegelt.

In **Fig. 4** ist in einer weiteren Ausführungsvariante die fertig verriegelte Verbindungsvorrichtung gezeigt. Das Bauteil 20 kann dabei als Distanzelement mit einem Panel 24 verbunden sein.

In **Fig. 5** ist in einer weiteren Ausführungsvariante die entriegelte Position der Verbindungsanordnung gezeigt. Die Entriegelung erfolgt, indem durch die Panelöffnung 26 auf den Druckknopf 22 gedrückt wird und die Feder 16 weiter zusammengedrückt wird. Damit drückt das Entriegelungsteil 8 die Blattfedern 6 vom Bolzen 2 weg und lässt ein Öffnen der Verbindung zu.

In **Fig. 6** ist in einer weiteren Ausführungsvariante die Notöffnung dargestellt. Beispielsweise kann durch einen kurzfristig auftretenden Unterdruck in einer Kabine eines Flugzeuges auf das Panel 24 eine Kraft wirken, die das Panel 24 von der Verbindung wegziehen will. Übersteigt diese Kraft die Auslösekraft der Verbindung, so werden die Blattfedern 6 durch das Zurückfahren des Bolzens 2 mit dem Schließkopf 10 durch die konisch angebrachte Anschlagfläche 14 nach außen gedrückt und dadurch wird die Verriegelung selbstständig gelöst.

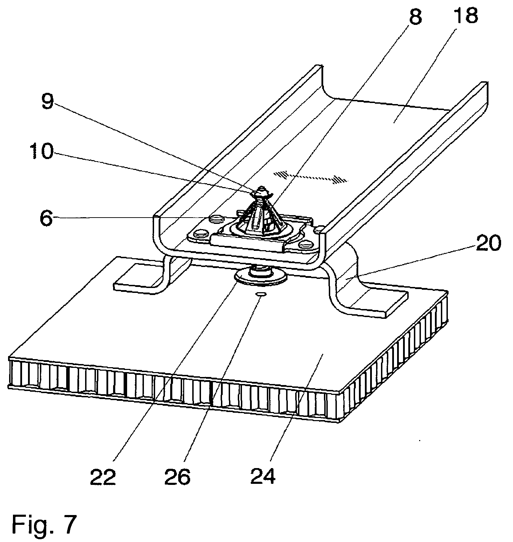

In einer weiteren Ausführungsvariante gemäß **Fig. 7** kann die Blattfeder 6 aus einem oder mehreren Blattfederarmen bestehen. Typischerweise werden 4 Blattfedern zu einer Blattfederanordnung zusammen in Wirkung gebracht. Anstelle der Bohrung im Bauteil 18 kann mittels Langloch erreicht werden, dass ein Positionsausgleich (X-Floating) in eine Richtung möglich ist. Wird die Bohrung größer als nötig und/oder viereckig ausgebildet, so ist ein Positionsausgleich in zwei Richtungen (X-Y-Floating), also in einer Ebene möglich.

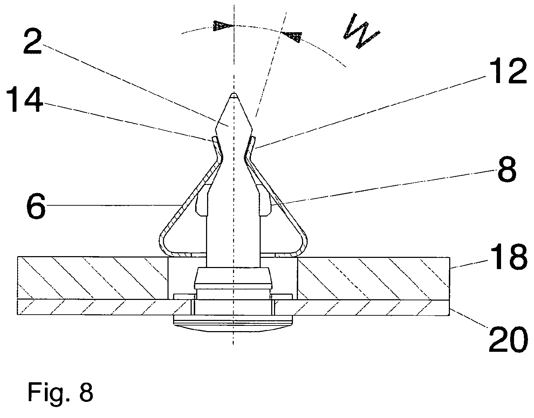

In einer weiteren Ausführungsvariante zeigt **Fig. 8****,** dass die Anschlagfläche als eine V-förmige Aussparung am Bolzen 2 oder am Schließkopf 10 ausgeführt sein kann.

Die V-förmige Aussparung kann auch als Nut am zylindrischen Teil des Bolzens 2 angebracht sein. Damit lassen sich noch kleinere Auslösekräfte einstellen oder es lässt sich durch die einfache Form des Bolzens 2 die Verbindung wirtschaftlicher herstellen. Am Bolzen 2 kann aber auch ein Schließkopf 10 als eine Art Doppelbund aus einem Stück hergestellt werden.

Durch diese beschriebenen Merkmale ist es mit einfachen Mitteln möglich, beinahe alle Anforderungen an eine bestimmte Auslösekraft in den erfindungsgemäßen Ausführungen zu erreichen. Dabei können die einzelnen Elemente auch in umgekehrter Art und Weise zusammen eingesetzt werden.

### Bezugszeichenliste

- 2: Bolzen
- 4: Hülse
- 6: Blattfeder
- 8: Entriegelungsteil
- 10: Schließkopf
- 12: Federende
- 14: Anschlagfläche
- 16: Feder
- 18: Bauteil 1
- 20: Bauteil 2
- 22: Druckknopf
- 24: Panel
- 26: Panelöffnung
- W: Winkel

## Patentansprüche

1. Verbindungsanordnung zum lösbaren Verbinden zweier mit aufeinander ausgerichteten Öffnungen versehener Bauteile (18, 20), bei der in der Öffnung des einen zu verbindenden Bauteils (20) ein in einer Hülse (4) geführter Bolzen (2) vorgesehen ist, wobei Hülse (4) und Bolzen (2) durch die Öffnung des anderen Bauteils (18) hindurchragen und der Bolzen (2) am hindurchragenden Teil mindestens eine Aussparung aufweist, in welche beim Eindrücken des Bolzens (2) in eine mit dem anderen Bauteil (18) in Verbindung stehende Blattfeder (6) mindestens ein Federende (12) eingreift, wobei der Bolzen (2) mit einem außerhalb der Hülse (4) angeordneten Entriegelungsteil (8) versehen ist und wobei das Entriegelungsteil (8) bei Eindrücken des Bolzens (2) die Blattfeder (6) zum Lösen der Verbindung spreizt,
**dadurch gekennzeichnet, dass** ein Notöffnungsmechanismus dadurch gebildet wird, dass an dem Bolzen (2) in einer Aussparung oder Nut oder an einem Schließkopf (10) eine Anschlagfläche (14) angebracht ist, die mit der Achse des Bolzens (2) einen Winkel (W) von kleiner als 90 Grad, insbesondere von kleiner als 60 Grad und mehr insbesondere von kleiner als 45 Grad bildet, und
dass die Blattfeder (6) am Federende (12) so geformt ist, dass die Anschlagfläche (14) mit dem Federende (12) der Blattfeder einen formschlüssigen Anschlag bilden kann,
wobei der Winkel (W) und die Federkraft der Blattfeder (6) so gewählt sind, dass bei einer axial auf den Bolzen (2) in Öffnungsrichtung wirkenden Auslösekraft, die die Klemmkraft der Blattfeder (6) übersteigt, die Blattfeder von der Anschlagfläche (14) lösbar ist.

2. Verbindungsanordnung nach Anspruch 1, **dadurch gekennzeichnet, dass** die Anschlagfläche (14) eine V-förmige Aussparung am Bolzen (2) oder am Schließkopf (10) ist.

3. Verbindungsanordnung nach Anspruch 1, **dadurch gekennzeichnet, dass** die Anschlagfläche (14) konisch ist.

4. Verbindungsanordnung nach Anspruch 1 oder 2, **dadurch gekennzeichnet dass** die Blattfeder (6) zwischen dem Entriegelungsteil (8) und dem Schließkopf (10) mit dem Bolzen (2) in Kontakt bringbar ist.

5. Verbindungsanordnung nach einem der Ansprüche 1 bis 4, **dadurch gekennzeichnet, dass** die Blattfeder (6) aus einem oder mehreren Blattfederarmen besteht.

6. Verbindungsanordnung nach einem der Ansprüche 1 bis 5, **dadurch gekennzeichnet, dass** der Schließkopf (10) teilweise in das Entriegelungsteil (8) einfahrbar ausgestaltet ist.

## Claims

1. Connection arrangement for releasably connecting two components (18, 20) provided with openings which are oriented towards one another, in which components a pin (2) guided into a sleeve (4) is provided in the opening of one of the components (20) to be connected, the sleeve (4) and pin (2) protruding through the opening of the other component (18) and the pin (2) having at least one recess on the protruding part in which at least one spring end (12) engages when the pin (2) is pushed into a leaf spring (6) which is connected to the other component (18), the pin (2) being provided with a unlocking member (8) arranged outside the sleeve (4), and the unlocking member (8) forcing apart the leaf spring (6) to release the connection when the pin (2) is pushed in, **characterised in that** an emergency opening mechanism is formed by a stop face (14) being attached to the pin (2) in a recess or groove or at a closing head (10), which stop face forms an angle (W) with the axis of the pin (2) of less than 90°, in particular of less than 60° and more particularly of less than 45°, and **in that** the leaf spring (6) is formed at the spring end (12) such that the stop face (14) can form an interlocking stop with the spring end (12) of the leaf spring,
the angle (W) and the spring force of the leaf spring (6) being selected such that, in the case of a release force acting axially on the pin (2) in the opening direction, which release force exceeds the clamping force of the leaf spring (6), the leaf spring can be released from the stop face (14).

2. Connection arrangement according to claim 1, **characterised in that** the stop face (14) is a V-shaped recess on the pin (2) or on the closing head (10).

3. Connection arrangement according to claim 1, **characterised in that** the stop face (14) is conical.

4. Connection arrangement according to either claim 1 or claim 2, **characterised in that** the leaf spring (6) can be brought into contact with the pin (2) between the unlocking member (8) and the closing head (10).

5. Connection arrangement according to any of claims 1 to 4, **characterised in that** the leaf spring (6) consists of one or more leaf spring arms.

6. Connection arrangement according to any of claims 1 to 5, **characterised in that** the closing head (10) is formed in part so as to be able to be retracted into the unlocking member (8).

## Revendications

1. Dispositif de fixation pour permettre la liaison amovible de deux pièces (18, 20) équipées d'ouvertures orientées l'une vers l'autre, dans lequel, dans l'ouverture de l'une des pièces (20) à relier, il est prévu un boulon (2) s'étendant dans un manchon (4), le manchon (4) et le boulon (2) passant au travers de l'ouverture de l'autre pièce (18), et le boulon (2) comportant, sur sa partie qui dépasse au moins un évidement dans lequel, lors de l'enfoncement du boulon (2) dans laquelle vient en prise au moins une extrémité élastique (12) d'un ressort à lames (6) relié à l'autre pièce (18), le boulon (8) étant muni d'une partie de déverrouillage située à l'extérieur du manchon (4), et, lors de l'enfoncement du boulon (2) la pièce de déverrouillage (8) écartant le ressort (6) pour desserrer la liaison,
**caractérisé en ce qu'**
un mécanisme d'ouverture de secours est formé du fait que sur le boulon (2), dans un évidement ou une rainure ou sur une tête de fermeture (10), est installée une surface formant butée (14) qui définit avec l'axe du boulon (2) un angle (W) inférieur à 90 degrés, en particulier inférieur à 60 degrés et plus particulièrement inférieur à 45 degrés, et
le ressort à lames (6) est formé à l'extrémité élastique (12) de sorte que la surface formant butée (14) puisse former avec l'extrémité (12) du ressort à lames une butée par la forme,
l'angle (W) et la force élastique du ressort (6) étant choisis de sorte que, en présence d'une force de déclenchement agissant axialement sur le boulon (2) dans la direction d'ouverture, qui dépasse la force de serrage du ressort à lames (6), ce ressort lame peut être détaché de la surface formant butée (14).

2. Dispositif de fermeture conforme à la revendication 1,
**caractérisé en ce que**
la surface formant butée (14) est un évidement en forme de V situé sur le boulon (2) ou sur la tête de fermeture (10).

3. Dispositif de liaison conforme à la revendication 1,
**caractérisé en ce que**
la surface formant butée (14) est conique.

4. Dispositif de liaison conforme à la revendication 1 ou 2,
**caractérisé en ce que**
le ressort à lames (6) peut être mis en contact avec le boulon (2) entre la partie de déverrouillage (8) et la tête de fermeture (10)

5. Dispositif de liaison conforme à l'une des revendications 1 à 4,
**caractérisé en ce que**
le ressort à lames (6) est constitué d'un ou de plusieurs bras de ressort à lames.

6. Dispositif de liaison conforme à l'une des revendications 1 à 5,
**caractérisé en ce que**
la tête de fermeture (10) est réalisée de façon à pouvoir être partiellement introduite dans la partie de déverrouillage (8).
